# EUROPÄISCHE PATENTSCHRIFT

(11) **EP 1 201 074 B1**
(45) Veröffentlichungstag und Bekanntmachung des Hinweises auf die Patenterteilung: **02.02.2005**
(21) Anmeldenummer: 00912358.9
(22) Anmeldetag: 03.02.2000
(51) Int. Cl.: H04M 3/54, H04M 3/46

(54) **VERFAHREN ZUR RUFWEITERLEITUNG VON TELEFONATEN UND/ODER ADRESSIERTEN DATEIEN, DIE AUF ELEKTRONISCHEM WEGE ÜBER LOKALE ODER GLOBALE NETZWERKE VERSCHICKT WERDEN**
METHOD FOR ROUTING TELEPHONE CALLS AND/OR ADDRESSED DATA FILES WHICH ARE TRANSMITTED VIA LOCAL OR GLOBAL NETWORKS
PROCEDE DE TRANSFERT D'APPELS ET/OU DE FICHIERS ADRESSES ENVOYES PAR VOIE ELECTRONIQUE DANS DES RESEAUX LOCAUX OU GLOBAUX

(30) Priorität: 17.02.1999 DE 19906347
(43) Veröffentlichungstag der Anmeldung: 02.05.2002
(73) Patentinhaber: Vodafone Holding GmbH, 40213 Düsseldorf (DE)
(72) Erfinder: JURCZYK-CLEMENS, Ewa Dipl.Ing., D-80689 München (DE); WISSING, Johannes Dr. Ing., D-51766 Engelskirchen (DE)
(74) Vertreter: Meissner, Peter E., Dipl.-Ing.
(86) Internationale Anmeldenummer: PCT/DE2000/000340
(87) Internationale Veröffentlichungsnummer: WO 2000/049795

(56) Entgegenhaltungen:
- EP-A- 0 498 593
- WO-A-94/29994
- WO-A-96/07286
- WO-A-98/26621
- WO-A-98/38781
- GB-A- 2 315 191
- US-A- 5 592 541

## Beschreibung

Die Erfindung betrifft ein Verfahren zur Rufweiterleitung von Telefonaten und/oder adressierten Dateien, die auf elektronischem Wege über lokale oder globale Netzwerke verschickt werden. Dateien können als Faxe elektronisch über Telefonleitungen verschickt werden. Unter den
verwendeten Begriff sollen aber auch E-mails fallen, wobei neben Texten auch beliebig andere Dateien, z. B. Bilder, Graphiken, Video- oder Sounddateien, Programme usw. verschickt werden können.

Es ist bekannt, die Rufnummer mehrerer Empfangsgeräte unter einer Kenn-Nummer zu speichern und ankommende Telefonate oder Dateien, die mit der Kenn-Nummer als Zielnummer adressiert sind, an mindestens ein Empfangsgerät, dessen Rufnummer unter der Kenn-Nummer abgespeichert ist, weiterzuleiten. Der Benutzer kann durch Eingabe der entsprechenden Rufnummer festlegen, an welches Gerät ankommende Telefonate oder Faxe
weitergeleitet werden sollen. Die Anweisung für die Rufweiterleitung kann über die Tastatur eines Telefons, das für eine digitale Datenübertragung oder für ein Mehrfrequenzwählverfahren (DTMF) eingerichtet ist, eingegeben werden. Dazu muß die Rufweiterleitung aktiviert
und als Zielnummer die gewünschte Telefonnummer über die Tastatur des Telefons eingegeben werden. Die benutzergeführte Eingabe mehrstelliger Rufnummern ist aufwendig und mit einem großen Zeitaufwand verbunden, was die Nutzung der Funktion beeinträchtigt.

In der Schrift GB 2 315 191 wird ein Rufweiterleitungsverfahren beschrieben, bei dem eine Liste möglicher Rufweiterleitungsziete vom Benutzer, mittels Prozedur oder entsprechender Taste, erstellt wird. Diese Liste wird an zentraler Stelle gespeichert (z.B. in einer Vermittlungsanlage) und entsprechend der angegebenen Rufweiterleitungsfolge abgearbeitet. Die Reihenfolge wird dynamisch angepasst und zwar nach Zeit (Stunden und Wochentage) und Trefferwahrschinlichkeit der weitergeleiteten Anrufe und in einem "Sercice Profil" gespeichert.

Die Schrift EP 0 498 593 beschreibt ein Anrufweiterleitungssystem, bei dem eine Anrufweiterleitungsliste programmiert werden kann. Diese Liste wird so abgearbeitet, dass der Anruf an die erste Nummer der Anrufweiterleitungsliste weitergeleitet wird und eine bestimmte (programmierte) Anzahl von Rufen abarbeitet. Fallls nicht abgehoben wird (oder besetzt ist), wird der Anruf an die zweite Nummer der Liste weitergeleitet usw. Die Anrufweiterleitüngsliste wird in einem "Service Control Processor" (SCP) gespeichert.

Die Schrift WO98/26621 offenbart ein Verfahren und System zur Anrufweiterleitung, bei dem ebenfalls eine Anrufweiterleitungsliste eingesetzt wird; hier mit der Möglichkeit, dass verschiedene Dienste (z.B. Sprache, Daten oder fax) an verschiedene Ziele weitergeleitet werden können. Es wird hierfür eine Anrufweiterleitungsliste pro Dienst gespeichert.

Der Erfindung liegt die Aufgabe zugrunde, das eingangs beschriebene Verfahren so auszubilden, dass die Anweisung für die Weiterleitung ankommender Telefonate und/oder elektronischer Dateien an Rufnummern von Geräten, die in der Praxis häufig im Wechsel benutzt werden, einfach und schnell eingegeben sowie geändert werden kann.

Ausgehend von einem Verfahren zur Rufweiterleitung von Telefonaten, Faxen und dergleichen, bei denen die Rufnummern mehrerer Empfangsgeräte unter einer einzigen Kennummer gespeichert werden und ankommende Telefonate und Dateien, die mit der Kennummer als Zielnummer adressiert sind, an mindestens ein Empfangsgerät, dessen.

Rufnummer unter der Kennummer abgespeichert ist, weitergeleitet werden, wird die Aufgabe erfindungsgemäß dadurch gelöst,
dass die Speicherplätze für die Rufnummern jeweils einer Taste auf der Tastatur eines für eine digitale Datenübertragung oder für ein Mehrfrequenzwählverfahren eingerichteten Telefons fest zugeordnet werden,
dass durch die Reihenfolge, in der die Tasten nach vorheriger Aktivierung durch einen Eingabecode betätigt werden, eine Rufweiterleitungsfolge für den Zugriff auf die Speicherplätze vorgegeben wird,
dass die Eingabe der Rufweiterleitungsfolge gespeichert und durch Drücken einer ein Abgrenzungssignal auslösenden Taste des Telefons abgeschlossen wird und
dass die Speicherplätze in der eingegebenen Rufweiterleitungsfolge abgefragt werden, wenn unter der Kennummer ein Telefonat oder eine Datei eingeht, und das Telefonat oder die Datei an die im betreffenden Smeicherplatz gespeicherte Rufnummer weitergeleitet wird.

Die Erfindung beruht auf der Überlegung, dass Personen überwiegend entweder über Geräte, die zu Hause oder im Büro installiert sind und im Festnetz. arbeiten, oder über ein Mobilfunkgerät erreichbar sind und eine benutzerfreundliche Handhabung der Rufweiterleitungsfunktion möglich ist, wenn die Rufnummern der in der Praxis überwiegend verwendeten Geräte Speicherplätzen fest zugeordnet werden und die Reihenfolge, mit der die Speicherplätze bzw. die dort gespeicherten Rufnummern im Zuge der Rufweiterleitung angewählt werden, von dem Benutzer flexibel festgelegt werden kann. Erfindungsgemäß wird dies erreicht, in dem jedem Speicherplatz eine bestimmte Taste auf der Telefontastatur zugeordnet wird und durch die Reihenfolge, in der die Tasten im Zuge des Eingabemodus betätigt werden, die Rufweiterleitungsfolge vorgegeben wird. Durch die Betätigung der Tasten bestimmt der Benutzer, welche Rufnummern im Falle einer Rufweiterteitung aktiviert werden und in welcher Reihenfolge der Verbindungsaufbau erfolgt.

Das Verfahren kann so geführt werden, dass im Zuge der Rufweiterleitung eine weitere Abfrage der Speicherplätze beendet wird, sobald eine Verbindung mit einer der gespeicherten Rufnummern hergestellt worden ist. Zweckmäßig wird das Verfahren ferner so geführt, dass ankommende Telefonate an eine Mail-Box weitergeleitet werden, wenn die Rufweiterleitungsfolge durch Auslösung einer Kennung deaktiviert ist oder keine Verbindung mit einer der nach Maßgabe der Rufweiterfeitungsfolge nacheinander angewählten Rufnummern zustandekommt.

Eine Doppelbelegung von Tasten der Telefontastatur ist erforderlich, wenn neben einer Mehrzahl von Speicherplätzen für Telefonnummern auch mehrere Speicherplätze für Rufnummern von Fax-Geräten und Geräten für die elektronische Datenverarbeitung bereit gestellt werden. Im Rahmen der erfindungsgemäßen Lehre wird die Rufweiterleitungsfolge für die Rufnummern von Fax-Geräten und Geräten für die elektronische Datenverarbeitung vorzugsweise durch Betätigung der den Telefonnummern zugeordneten Tasten in Kombination mit einer zusätzlichen Taste, die ein Kennungssignal für die Art der Datenkommunikation abgibt, eingegeben. Die Speicherplätze für die Rufnummern von Telefongeräten, Fax-Geräten und Datenverarbeitungsgeräten, die in räumlicher Nähe z. B. im privaten Haushalt, betrieben werden, können derselben Taste zugeordnet werden, wobei für die Eingabe der Rufweiterleitungsfolge an Fax-Geräte, und Datenverarbeitungsgeräte noch zusätzlich die Taste für das Kennungssignal gedruckt werden muß. Bei der Eingabe der Rufweiterteitungsfolge hat der Benutzer dabei die Möglichkeit, die Rufweiterleitung für Telefax-Geräte und Telefongeräte unterschiedlich festzulegen.

Der Benutzer hat die Möglichkeit, alle Rufnummern nach vorheriger Eingabe einer Kennung über die Tastatur des Telefons zu verändern. Zweckmäßig werden drei Tasten mit Rufnummern belegt, die nicht oder nur selten verändert werden. Die Speicherplätze dieser Tasten werden zweckmäßig reserviert für Rufnummern von im Festnetz betriebenen Geräten zu Hause und im Büro sowiefür einen Mobilfunkanschluß. Der Speicherplatz, der der vierten Taste zugeordnet ist, kann für Zielrufnummern, die von dem Nutzer häufig geändert werden, eingesetzt werden. Vorzugsweise sind die vier Tasten in einem Viereck angeordnet, wobei eine Festlegung auf die Tasten mit den Ziffern "4", "2", "6" und "8" bevorzugt ist. Diesen Ziffern sind die Buchstaben "H" (für Haus), "B" (für Büro), "M" (für Mobilfunknummer) und "V" (für variablen Anschluß) zugeordnet. Auch andere Anordnungen, vorzugsweise im Viereck, sollen nicht ausgeschlossen sein. Schließlich liegt es im Rahmen der Erfindung, dass Telefongeräte verwendet werden, deren Tastatur zusätzliche Stationstasten für die Einstellung der Rufweiterleitungsfclge aufweisen, wobei die Stationstasten und die den Speicherplätzen zugeordneten Tasten der Normtastatur dieselben Signale abgeben. Dadurch ist gewährleistet, dass das Verfahren sowohl mit herkömmlichen Telefongeräten sowie auch Telefongeräten, die zusätzliche Stationstasten aufweisen, betrieben werden kann und die Geräte auch in Kombination eingesetzt werden können.

## Patentansprüche

1. Verfahren zur Rufweiterleitung von Telefonaten und/oder adressierten Dateien, die auf elektronischem Wege über lokale oder globale Netzwerke verschickt werden, wobei die Rufnummern mehrerer Empfangsgeräte unter einer einzigen Kennummer gespeichert werden und ankommende Telefonate und Dateien, die mit der Kenn-Nummer als Zielnummer adressiert sind, an mindestens ein Empfangsgerät, dessen Rufnummer unter der Kennummer abgespeichert ist; weitergeleitet werden,
**dadurch gekennzeichnet,**
**dass** die Speicherplätze für die Rufnummern jeweils einer Taste auf der Tastatur eines für eine digitale Datenübertragung oder für ein Mehrfrequenz - Wählverfahren eingerichteten Telefons fest zugeordnet werden,
**dass** durch die Reihenfolge, in der die Tasten nach vorheriger Aktivierung durch einen Eingabecode betätigt werden, eine Rufweiterleitungsfolge für den Zugriff auf die Speicherplätze vorgegeben wird,
**dass** die Eingabe der Rufweiterleitungsfolge gespeichert und durch Drücken einer ein Abgrenzungssignal auslösenden Taste des Telefons abgeschlossen wird und
**dass** die Speicherplätze in der eingegebenen Rufweiterleitungsfolge abgefragt.werden, wenn unter der Kennummer ein Telefonat oder eine Datei eingeht, und das Telefonat oder die Datei an die im betreffenden Speicherplatz gespeicherte Rufnummer weitergeleitet wird.

2. Verfahren nach Anspruch 1,
**dadurch gekennzeichnet,**
**dass** die weitere Abfrage der Speicherplätze beendet wird, sobald eine Verbindung mit einer der gespeicherten Rufnummern hergestellt worden ist.

3. Verfahren nach Anspruch 1 oder 2,
**dadurch gekennzeichnet,**
**dass** ankommende Telefonate an eine Mail-Box weitergeleitet werden, wenn die Rufweiterleitungsfolge durch Auslösen einer Kennung deaktiviert ist oder keine Verbindung mit einer der nach Maßgabe der Rufweiterleitungsfolge nacheinander angenähten Rufnummern zustandekommt.

4. Verfahren nach einem der Ansprüche 1 bis 3,
**dadurch gekennzeichnet,**
**dass** die Rufweiterleitungsfolge für die Rufnummern von Fax-Geräten und Geräten für die elektronische Datenverarbeitung durch Betätigung der den Telefonnummern zugeordneten Tasten in Kombination mit einer zusätzlichen Taste, die ein Kennungssignal für die Art der Datenkommunikation abgibt, eingegeben wird.

5. Verfahren nach einem der Ansprüche 1 bis 4,
**dadurch gekennzeichnet,**
**dass** die Speicherplätze vier Tasten der Telefontastatur zugeordnet werden, die in einem Viereck angeordnet sind.

6. Verfahren nach Anspruch 5,
**dadurch gekennzeichnet,**
**dass** drei Tasten fest eingerichteten oder nur selten veränderten Rufnummern zugeordnet sind und die der vierten Taste zugeordnete Rufnummer nach vorheriger Eingabe einer Kennung über die Tastatur des Telefons veränderbar ist.

7. Verfahren nach einem der Ansprüche 1 bis 6,
**dadurch gekennzeichnet,**
**dass** Telefongeräte verwendet werden, deren Tastatur zusätzliche Stationstasten für die Einstellung der Rufweiterleitungsfolge aufweisen, wobei die Stationstasten und die den Speicherplätzen zugeordneten Tasten der Normtastatur dieselben Signale abgeben.

## Claims

1. Method for forwarding telephone calls and/or addressed files that are sent by electronic means via local or global networks, the call numbers of several receiver devices being stored under a single identification number, and incoming calls and files that are addressed with the identification number as their destination number being forwarded to at least one receiver device, the call number of which is stored under the identification number,
**characterised**
**in that** the memory locations for the call numbers are each permanently assigned to a key on the keypad of a telephone which is set up for digital data transmission or for a multi-frequency dialling process,
**in that**, by means of the sequence in which the keys are operated following previous activation by means of an input code, a call forwarding sequence is predetermined for access to the memory areas,
**in that** the entering of the call forwarding sequence is stored and is completed by pressing a key on the telephone that activates a demarcation signal, and
**in that**, when a call or file comes in under the identification number, the memory locations are requested in the call forwarding sequence that has been entered, and the call or the file is forwarded to the call number that is stored in the relevant memory location.

2. Method as in Claim 1,
**characterised in that**
further polling of the memory locations is stopped as soon as a connection is established with one of the stored call numbers.

3. Method as in Claim 1 or 2,
**characterised in that**
incoming calls are forwarded to a mailbox if the call forwarding sequence is deactivated by triggering an identification or if no connection is established with one of the call numbers appended one after the other in accordance with the call forwarding sequence.

4. Method as in one of Claims 1 to 3,
**characterised in that**
the call forwarding sequence for the call numbers of fax machines and data processing devices is entered by pressing the keys assigned to the telephone numbers in combination with an additional key which emits the identification signal, for the type of data communication.

5. Method as in one of Claims 1 to 4,
**characterised in that**
the memory locations are assigned to four keys on the keypad which are arranged in a rectangular shape.

6. Method as in Claim 5,
**characterised in that**
three keys are assigned to call numbers that are permanently set or rarely changed, and the call number assigned to the fourth key can be changed by previously entering an identification via the keypad of the telephone.

7. Method as in one of Claims 1 to 6,
**characterised in that**
the telephones that are used have keypads with extra station keys for setting the call forwarding sequence, the station keys and the standard keypad keys assigned to the memory locations emitting the same signals.

## Revendications

1. Procédé de transfert d'appel de communications téléphoniques et/ou fichiers adressés qui sont envoyés par voie électronique par l'intermédiaire de réseaux locaux ou globaux, les numéros d'appel de plusieurs récepteurs étant mis en mémoire sous un numéro d'identification unique et les communications téléphoniques et fichiers arrivants qui sont adressés avec le numéro d'identification comme numéro de destination étant transférés à au moins un récepteur dont le numéro d'appel est mis en mémoire sous le numéro d'identification,
**caractérisé**
**en ce que** les emplacements de mémoire pour les numéros d'appel sont associés de manière fixe à une touche du clavier d'un téléphone aménagé pour une transmission de données numérique ou pour une numérotation multifréquence,
**en ce que** par l'ordre dans lequel les touches sont actionnées après activation préalable par un code d'entrée, une succession de transferts d'appel est prédéfinie pour l'accès aux emplacements de mémoire,
**en ce que** l'entrée de la succession de transferts d'appel est mise en mémoire et est terminée par pression d'une touche du téléphone déclenchant un signal de délimitation et
**en ce que** les emplacements de mémoire sont interrogés dans l'ordre des transferts d'appel entrés quand une communication téléphonique ou un fichier entre sous le numéro d'identification et que la communication téléphonique ou le fichier est transmis au numéro d'appel mis en mémoire à l'emplacement de mémoire concerné.

2. Procédé selon la revendication 1,
**caractérisé en ce que** la suite de l'interrogation des emplacements de mémoire est terminée dès qu'une liaison a été établie avec l'un des numéros d'appels mis en mémoire.

3. Procédé selon la revendication 1 ou 2,
**caractérisé en ce que** des communications téléphoniques qui arrivent sont transmises à une boîte à lettres lorsque la succession de transferts d'appel est désactivée par déclenchement d'un code ou qu'aucune liaison n'est établie avec l'un des numéros d'appel approchés successivement en fonction de la succession de transferts d'appel.

4. Procédé selon l'une des revendications 1 à 3,
**caractérisé en ce que** la succession de transferts d'appel pour les numéros d'appel de fax et d'appareils de traitement électronique des données est entrée par actionnement des touches associées aux numéros téléphoniques en combinaison avec une touche supplémentaire qui délivre un signal de code pour le mode de communication de données.

5. Procédé selon l'une des revendications 1 à 4,
**caractérisé en ce que** les emplacements de mémoire sont associés à quatre touches du clavier du téléphone qui sont disposées en carré.

6. Procédé selon la revendication 5,
**caractérisé en ce que** trois touches sont aménagées de manière fixe ou associées à des numéros d'appel modifiés seulement rarement et le numéro d'appel associé à la quatrième touche peut être modifié après entrée préalable d'un code par l'intermédiaire du clavier du téléphone.

7. Procédé selon l'une des revendications 1 à 6,
**caractérisé en ce qu'**on utilise des appareils téléphoniques, dont le clavier présente des touches de station supplémentaires pour le réglage de la succession des transferts d'appel, les touches de station et les touches du clavier normal associées aux emplacements de mémoire délivrant les mêmes signaux.
